# EUROPEAN PATENT APPLICATION

(11) **EP 2 256 530 A1**
(43) Date of publication of application: **01.12.2010**
(21) Application number: 10005316.4
(22) Date of filing: 21.05.2010
(51) Int. Cl.: G02B 6/38

(54) **Protected fiber optic assemblies and methods for forming the same**

(30) Priority: 29.05.2009 US 182131 P; 31.08.2009 US 550922
(71) Applicant: Corning Cable Systems LLC, Hickory, NC 28601 (US)
(72) Inventor: Liu, Ziwei, Fort Worth Texas 76137 (US)
(74) Representative: Sturm, Christoph

(57) **Abstract**

Fiber optic assemblies are disclosed that include a protecting material that encapsulates a portion of a fiber optic connector for protecting the same in the field until needed by the craft. In one embodiment, the fiber optic assembly includes a protective barrier such as a tape, foil, or the like disposed about the fiber optic connector. In other embodiments, the fiber optic assembly includes structure for removing the protecting material such as a ripcord or a notch in the protecting material. Additionally, the protecting material may include carbon black for providing UV protection.

## Description

### BACKGROUND

### Field

The present disclosure relates generally to fiber optic assemblies that provide environmental protection until needed in the field. More specifieally, the disclosure relates to fiber optic assemblies such as fiber optic connectors having a protective material thereover that is removable.

### Technical Background

Fiber optic communication networks are experiencing explosive growth. In just a few years, the transmission of optical communication signals for voice, video, data, and the like has soared. Moreover, the future growth of fiber optical networks is necessary because subscribers are still demanding more bandwidth. To accommodate the bandwidth demand, network operators are investing in and installing optical networks to route optical fibers toward the subscriber. However, not all of the connections of the optical network are made when the fiber optic assemblies are installed. For instance, the network operator may route fiber optic assemblies for an entire neighborhood even though only a fraction of the subscribers sign-up for service. Instead, the network operator will make the optical connections when the subscriber sighs-up for service.

The optical fibers within the fiber optic cables are protected from environmental effects by a cable jacket, a duct, or other like structure. The fiber optic connectors at the end of the cable typically include a dust cap for protecting the ferrule and its mating end face from dust, damage, and contamination. However, the fiber optic dust caps can allow for the ingress of moisture and/or other contaminants that can affect the optical performance of the connection. Moreover, the dust cap does not protect the rest of the fiber optic connector from damage. Thus, there is an unresolved need to protect fiber optic connectors that are not initially connected, but still allow for quick and easy connection by the craft when desired.

### SUMMARY

The disclosure relates to fiber optic assemblies having a protecting material encapsulating a portion of the fiber optic connector for protecting the same in the field until needed by the craft. In one embodiment, the fiber optic assembly includes a protective barrier such as a tape, foil, or the like disposed about the fiber optic connector. In other embodiments, the fiber optic assembly includes structure for removing the protecting material such as a ripcord or a notch in the protecting material. Additionally, the protecting material may include carbon black for providing UV protection.

Additional features and advantages are set forth in the detailed description that follows, and in part will be readily apparent to those skilled in the art from that description or recognized by practicing the concepts described herein, including the detailed description that follows, the claims, and the appended drawings. It is to be understood that both the foregoing general description and the following detailed description present exemplary embodiments, and are intended to provide an overview or framework for understanding the nature and character of the invention as it is claimed. The accompanying drawings are included to provide a further understanding of the concepts, and are incorporated into and constitute a part of this specification. The drawings illustrate various embodiments, and together with the detailed description, serve to explain the principles and operations thereof.

### BRIEF DESCRIPTION OF THE DRAWINGS

These and other features, aspects and advantages are better understood when the following detailed description is read with reference to the accompanying drawings, in which:

**FIG. 1** is a schematic view of a fiber optic assembly having a fiber optic connector;

**FIG. 2** is a view of the fiber optic assembly of **FIG. 1** having a protective barrier being applied about a portion of the fiber optic connector;

**FIG. 3** is a view of the fiber optic assembly of **FIG. 1** having a protective material encapsulating a portion of the fiber optic connector;

**FIG. 4** is a view showing a fiber optic connector placed into a mold for forming a protective material therearound;

**FIG. 5** is a view of a fiber optic assembly having a protective material for protecting the same with a ripcord extending therefrom for aiding in the removal of the protective material; and

**FIG. 6** is a view of fiber optic assembly having a protective material with a notch formed therein for aiding in the removal of the same.

### DETAILED DESCRIPTION

Reference is now made to preferred embodiments, examples of which are illustrated in the accompanying drawings. Whenever possible, the same or similar reference numbers and symbols are used throughout the drawings to refer to the same or similar parts.

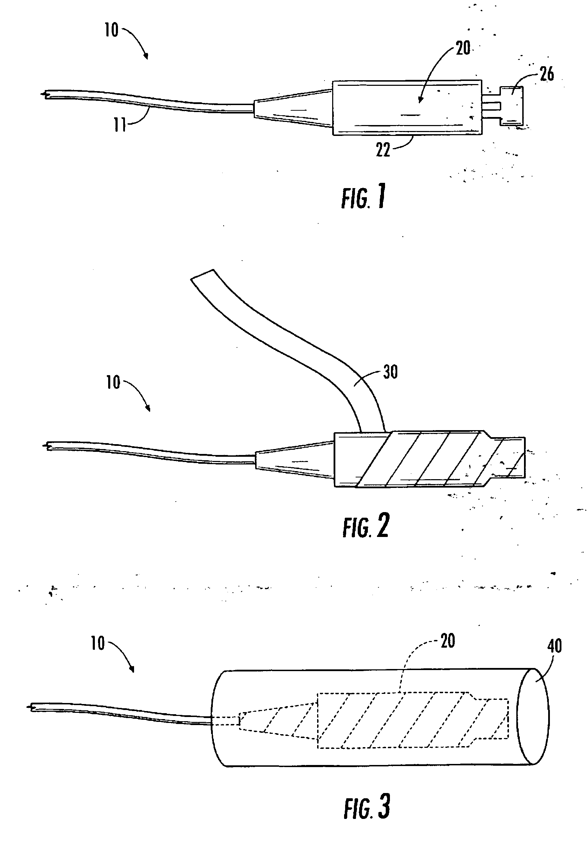

**FIG. 1** is a schematic view of a fiber optic assembly **10** having a fiber optic cable **11** and a fiber optic connector **20.** Fiber optic assembly **10** can include any suitable fiber optic cable and/or fiber optic connector. By way of example, fiber optic cable **11** includes at least one optical fiber (not visible) and a cable jacket, but may include other cable components such as strength members, water-blocking or water-swelling substances, or other suitable components. Fiber optic connector **20** includes a connector housing **22,** a ferrule **24** (not visible) and a dust cap **26.** Additionally, the fiber optic connector **20** can include other components such as a boot, a spring for biasing the ferrule forward, a crimp band to secure strength members of the fiber optic cable, and/or other suitable components as known in the art. The concepts disclosed herein protect a portion of the fiber optic connector by providing environmental protection until it is needed in the field. In one embodiment, a protecting material encapsulates a portion of the fiber optic connector, thereby inhibiting the ingress of moisture and/or other contaminants that can affect the optical performance of the fiber optic connector. In another embodiment, a protective barrier is disposed between a portion of the fiber optic connector and the protecting material.

**FIG. 2** is a view of the fiber optic assembly **10** having an optional protective barrier **30** being applied about a portion of the fiber optic connector **20** before the protecting material is applied over the same. The protective barrier **30** can be any suitable material and/or structure and is used for providing a barrier between the fiber optic connector **20** and the protecting material (applied afterward) that encapsulates a portion of the fiber optic connector. By way of example, the protective barrier **30** may be formed from any suitable material such as Teflon®, paper, foil, shrink-wrap, or the like. In this embodiment, protective barrier **30** is a tape wrapped about a portion of the fiber optic connector **20** as shown, but other structures such as a small bag-like structure or the like are possible to provide a protective barrier. In one advantageous embodiment, the protective barrier is a polytetrafluoroethylene (PTFE) tape (i.e., Teflon® tape) that is wrapped directly over the fiber optic connector (including the dust cap). Moreover, the tape can be wrapped about fiber optic connector **20** in any suitable orientation. The PTFE tape easily conforms to the fiber optic connector and may be easily and cleanly removed by the craft when access to the fiber optic connector is desired. Preferably, the protective barrier **30** covers the entire fiber optic connector, but it may cover less than the entire fiber optic connector **20**.

**FIG. 3** is a view of the fiber optic assembly **10** having a protective material **40** encapsulating at least a portion of the fiber optic connector **20** (shown in dashed lines) for protecting the same. Protective material **40** may be applied directly over a portion of the fiber optic connector **20** or over a protective barrier **30** as shown. If the protective barrier **30** is omitted, the protective material used should preferably strip cleanly from the fiber optic connector **20** and not leave any residue thereon for the craft to clean. Protective material **40** can have any suitable shape about a portion of fiber optic connector **20.** Since the protective material provides robust environmental protection it is a rugged yet easily removable material so that no tools are required by the craft for removing the same. Additionally, advantageous embodiments of protective material **40** include carbon black, thereby providing a degree of UV protection to the same; however, it is possible to practice the concepts disclosed with materials that do not include carbon black. By way of example, variations of protective material **40** may have any suitable amount of carbon black such as 3%, 5 %, 10%, or more of carbon black for providing UV protection.

Any suitable material may be used as protective material **40,** but it should not bond to the protective barrier **30** or the fiber optic assembly **10.** Moreover, suitable materials will not "leak" inside the fiber optic connector. By way of example, two different protective materials **40** are disclosed herein. The first protective material **40** is a polyurethane based two-part gel that cures in about twenty minutes after mixing. The cure time for this first material may be reduced when the temperature is elevated. The formulation for the first material is listed below:

### First Protective Material Formulation

| | |
|---|---|
| MDI prepolymer | 100 |
| Hydroxyl-terminated polybutadiene | 106 |
| Plasticizer (naphthenic oil Nytex 5110) | 292 |
| Tin catalyst | 0.1 |
| Carbon black | 12.5 |
| Moisture absorbent (zeolithe T) | 1.12 |
| Irganox 1010 | 0.1 |

In particular, the MDI prepolymer has a percentage NCO of approximately 3.8% and the 1-ydroxyl-terminated polybutadiene has an OH content of about 0.85 mmol/gram and a viscosity of about 8000 cps at 23° C for the first protective material formulation. Additionally, the plasticizer has a viscosity of 110 cSt at 40° C. When cured, this particular formulation provides excellent sealing characteristics and is easily fractured and removed (i.e.,peeled) from the fiber optic assembly by hand without the use of tools. Additionally, this first formulation may be cleanly removed without leaving an observable residue. Of course, other suitable polyurethane based two-part gel formulations are possible.

Likewise, other classes of materials are possible for use as the protective material. By way of example, a thermally-reversible gel (liquefies and solidifies as a function of temperature) may be used. The formulation for a second first protective material **40** is listed below:

### Second Protective Material Formulation

| | |
|---|---|
| Kraton G1650 | 40 |
| Mineral Oil | 100 |
| Irganox 1010 | 0.1 |
| DSTDP (stabilizer) | 0.08 |
| Carbon black | 3.5 |

This second formulation provides good sealing characteristics and is easily fractured and removed (i.e.,peeled) from the fiber optic assembly by hand without the use of tools. Additionally, this second formulation may be cleanly removed without leaving an observable residue. Of course, other suitable gels formulations are possible. The two formulations disclosed herein are merely explanatory and many other material formulations are possible depending the desired characteristics.

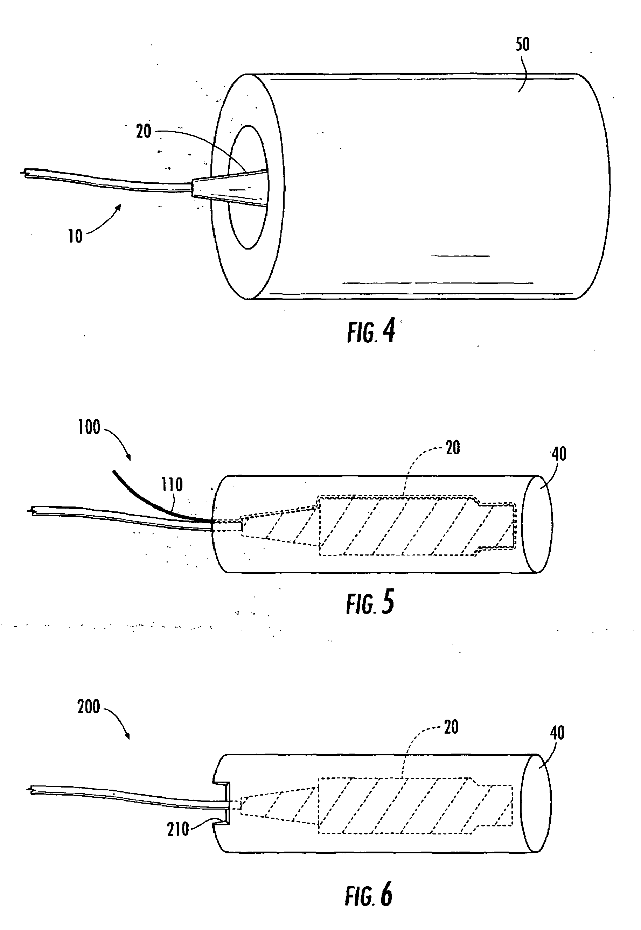

**FIG. 4** depicts the fiber optic connector **20** of fiber optic assembly **10** placed into an exemplary mold **50** for forming the protective material **40** therearound. Mold **50** can have any suitable shape and may include suitable structure for positioning the fiber optic connector **20** therein. In other words, the mold may have structure for proper placement of the fiber optic connector within the mold so that fiber optic connector is not too close to an outer surface of the protective material. Although mold **50** is depicted for a single fiber optic assembly, other embodiments of the mold can be a gang mold for forming several the protective material about several fiber optic assemblies at once.

Additionally, fiber optic assemblies disclosed herein can include structure for aiding the removal of the protective material and/or protective barrier. **FIG. 5** depicts a fiber optic assembly **100** having the protective material **40** encapsulating a portion of a fiber optic connector **20** (not visible) that is similar to fiber optic assembly **10,** but that further includes a ripcord **110.** Ripcord **110** enables the removal of the protective material and/or protective barrier by craft by pulling ripcord **110** to tear through the same. Ripcord **110** may be formed from any suitable material have the necessary strength. Examples of materials for the ripcord **110** include aramid yarns, metal wire, nylon, etc. As shown, a portion of ripcord **110** extends outward of protective material so that the craft may grip the same and pull the ripcord **110** through the protective material and/or the protective barrier. Additionally, ripcord **110** can be positioned over a portion of the fiber optic connector **20** as shown (i.e., over the front portion) so it tears the protective material rather than being pulled from the protective material.

Fiber optic structures can have other structures for aiding in the removal of the protective material and/or protective barrier. **FIG. 6** depicts a fiber optic assembly **200** having a protective material **40** with one or more notches **210** formed therein for aiding in the removal of the protective material. Consequently, the craft can separate (i.e., initiate a fracture) of the protective material **40** by applying a force at the notches **210**. Moreover, the one or more notches **210** may be formed at any suitable portion of protective material. For instance, complementary notches may be located about 180 degrees apart on the sides so that the craft may begin separating the protective material at either side. In other embodiments, the notch **210** may be located at the rear of the protective material. In any event, the notches are preferably located where the craft can easily initiate a fracture of the protective material **40** to remove the same.
It will be apparent to those skilled in the art that various modifications and variations can be made without departing from the spirit and scope of the invention. Thus, it is intended that the present invention cover the modifications and variations provided they come within the scope of the appended claims and their equivalents.

## Claims

1. A fiber optic assembly, comprising:
a fiber optic connector having at least one ferrule with at least one optical fiber attached to the ferrule; and
a protecting material encapsulating a portion of the fiber optic connector for protecting the same.

2. The fiber optic assembly of claim 2, further including a dust cap.

3. The fiber optic assembly of claims 1 or 2, wherein the fiber optic assembly further includes a fiber optic cable.

4. The fiber optic assembly of claims 1-3, wherein a protective barrier is disposed between a portion of the fiber optic connector and the protecting material.

5. The fiber optic assembly of claim 4, wherein the protective barrier is a tape.

6. The fiber optic assembly of claims 1-5, wherein the protecting material includes carbon black.

7. The fiber optic assembly of claims 1-6, further including a ripcord for removing the protecting material.

8. The fiber optic assembly of claims 1-7, wherein the protecting material has a notch formed therein for aiding in removal of the protecting material.

9. The fiber optic assembly of claims 1-8, further including a PTFE tape wrapped about a portion of the fiber optic connector.

10. A-method of making a fiber optic assembly comprising the steps of:
providing a fiber optic connector; and
encapsulating a portion of the fiber optic connector with a protecting material.

11. The method of claim 10, further including the step of placing a protective barrier about a portion of the fiber optic connector.

12. The method of claim 11. wherein the protective barrier is a tape.

13. The method of claims 10-12, the fiber optic connector further including a dust cap.

14. The method of claims 10-13, wherein the protecting material includes carbon black.

15. The method of claims 10-14, wherein the fiber optic assembly includes a fiber optic cable.
